# EUROPÄISCHE PATENTSCHRIFT

(11) **EP 0 540 924 B1**
(45) Veröffentlichungstag und Bekanntmachung des Hinweises auf die Patenterteilung: **16.08.1995**
(21) Anmeldenummer: 92117789.5
(22) Anmeldetag: 17.10.1992
(51) Int. Cl.: H05B 41/38, H05B 41/29

(54) **Vorschaltgerät zum Starten und Betreiben von Wechselstrom-Hochdruck-Gasentladungslampen**
Ballast for starting and operating high pressure discharge lamps
Ballast pour amorcer et alimenter des lampes à décharge haute pression

(30) Priorität: 06.11.1991 DE 413648
(43) Veröffentlichungstag der Anmeldung: 12.05.1993
(73) Patentinhaber: Hella KG Hueck & Co., 59552 Lippstadt (DE)
(72) Erfinder: Daub, Wolfgang, W-4780 Lippstadt (DE); Wendt, Friedrich-Karl, W-4796 Salzkotten (DE)

(56) Entgegenhaltungen:
- EP-A- 0 411 617
- EP-A- 0 415 496
- FR-A- 2 489 069
- US-A- 4 587 460

## Beschreibung

Die Erfindung betrifft ein Vorschaltgerät zum Starten und Betreiben von Wechselstrom-Hochdruck-Gasentladungslampen, das aus einer Gleichspannungsquelle gespeist wird, mit einem DC-DC-Wandler, der aus der Gleichspannung der Gleichspannungsquelle eine stabilisierte und/oder leistungsgeregelte Gleichspannung erzeugt, mit einem Brückenschalter, der mit dem DC/DC-Wandler verbunden ist und der über eine Zündeinrichtung zum Erzeugen einer Zündspannung mit der Hochdruck-Gasentladungslampe verbunden ist, wobei der Brückenschalter im Gleichstrombetrieb oder Wechselstrombetrieb betrieben werden kann.

Aus der europäischen Patentanmeldung EP 0 415 496 A2 ist eine Schaltungsanordnung zum Speisen einer Last bekannt, die als ein Vorschaltgerät zum Starten und Betreiben von Wechselstrom-Hochdruck-Gasentladungslampen ausgebildet ist.

Ein DC/DC-Wandler ist dabei mit einer Gleichspannungsquelle verbunden und erzeugt aus der Gleichspannung von der Gleichspannungsquelle eine stabilisierte und/oder leistungsgeregelte Gleichspannung, die an einen Brückenschalter, der hier als ein Wechselrichter ausgebildet ist, weitergeleitet wird. Der Wechselrichter erzeugt aus der Gleichspannung von dem DC/DC-Wandler eine Wechselspannung, die geeignet ist, die Wechselstrom-Hochdruck-Gasentladungslampe zu betreiben. Zum Zünden der Hochdruck-Gasentladungslampe ist zwischen dem Brückenschalter und der Hochdruck-Gasentladungslampe eine Zündeinrichtung angeordnet, die beim Starten der Hochdruck-Gasentladungslampe eine geeignete Zündspannung aus der Spannung von dem Brückenschalter erzeugt.

Bei dem bekannten Vorschaltgerät zum Starten und Betreiben von Wechselstrom-Hochdruck-Gasentladungsampen erweist sich als nachteilig, daß die Lampe unmittelbar nach dem Zünden wieder verlöschen kann und wieder nachgezündet werden muß. Dieses Verlöschen geschieht häufig während der ersten Nulldurchgänge des Lampenwechselstroms. Das Nachzünden der Lampe reduziert ihre Lebensdauer beträchtlich und führt zu Blitz- und Flackererscheinungen, welche beim Betreiben der Lampe in Kraftfahrzeugscheinwerfern im Straßenverkehr gefährliche Situationen erzeugen können.

Aus der deutschen Offenlegungsschrift DE 40 17 415 A1 und der europäischen Patentanmeldung EP 0 240 049 A1 sind Vorschaltgeräte zum Starten und Betreiben von Wechselstrom-Hochdruck-Gasentladungslampen bekannt, die die Merkmale des Oberbegriffs des Anspruchs 1 aufweisen. Auch bei diesen Vorschaltgeräten zum Starten und Betreiben von Wechselstrom-Hochdruck-Gasentladungslampen ergeben sich die oben genannten Nachteile, so daß ein zuverlässiger und sicherer Betrieb z. B. in Kraftfahrzeugen nicht gewährleistet ist.

Der Erfindung liegt die Aufgabe zugrunde, ein Vorschaltgerät zum Starten und Betreiben von Wechselstrom-Hochdruck-Gasentladungslampen zu schaffen, das einfach und kostengünstig herstellbar ist, bei dem ein zuverlässiges schnellstmögliches Zünden gewährleistet ist und der stabile Brennzustand zuverlässig, möglichst schnell und ohne Flackererscheinungen erreicht wird.

Die Aufgabe wird erfindungsgemäß dadurch gelöst, daß der Brückenschalter bei Inbetriebnahme des Vorschaltgeräts im Gleichstrombetrieb betrieben wird, daß eine Statusbestimmungseinrichtung, die ein Signal erzeugt, wenn die Hochdruck-Gasentladungslampe erfolgreich gezündet wurde, mit einer Verzögerungseinrichtung verbunden ist, die mit dem Brückenschalter verbunden ist und diesem das Signal, von der Statusbestimmungseinrichtung um eine Verzögerungszeit verzögert, zuleitet und daß der Brückenschalter durch das Signal von dem Gleichstrombetrieb in den Wechselstrombetrieb geschaltet wird.

Es ist von Vorteil, daß der Brückenschalter bei Inbetriebnahme des Vorschaltgeräts im Gleichstrombetrieb betrieben wird, wodurch sichergestellt wird, daß die Wechselstrom-Hochdruck-Gasentladungslampe zuverlässig gezündet wird und möglichst schnell ohne Flackerneigungen den stabilen Brennzustand erreicht.

In diesem Zusammenhang erweist sich als besonders vorteilhaft, daß durch den Gleichstrombetrieb der Zündeinrichtung ein festes Potential zugeführt wird, wodurch das Impuls-Überlagerungszündgerät über die zweiadrige Lampenversorgungsleitung ohne eine weitere Zündhilfsspannung lampennah und räumlich getrennt vom Vorschaltgerät betrieben werden kann.

Es ist besonders vorteilhaft, daß eine Statusbestimmungseinrichtung, die ein Signal erzeugt, wenn die Hochdruck-Gasentladungslampe erfolgreich gezündet wurde, mit einer Verzögerungseinrichtung verbunden ist, die mit dem Brückenschalter verbunden ist und diesem das Signal, von der Statusbestimmungseinrichtung um eine Verzögerungszeit verzögert, zuleitet und daß der Brückenschalter durch das Signal von dem Gleichstrombetrieb in den Wechselstrombetrieb geschaltet wird, wodurch sichergestellt wird, daß nach erfolgreicher Zündung der Wechselstrom-Hochdruck-Gasentladungslampe diese, sobald ein stabiler Brennzustand erreicht ist, mit einem erforderlichen Wechselstrom weiterbetrieben wird, so daß ein Erlöschen der Hochdruck-Gasentladungslampe vermieden wird. Die durch die Verzögerungseinrichtung vorgegebene Verzögerungszeit wird dabei in Abhängigkeit von den Betriebsdaten der Hochdruck-Gasentladungslampe und/oder dem Betriebszustand der Hochdruck-Gasentladungslampe und/oder der jeweiligen gewählten Ausführungsform des Vorschaltgeräts derart gewählt, daß die Lampe erst im stabilen Brennzustand mit dem erforderlichen Wechselstrom betrieben wird.

Es ist von Vorteil, daß die Statusbestimmungseinrichtung eine Lampenstrom- und/oder Lampenspannungsmeßeinrichtung ist, die das Signal erzeugt, wenn der Lampenstrom und/oder die Lampenspannung einen vorgegebenen wert erreicht, weil somit sichergestellt wird, daß in Abhängigkeit von dem jeweiligen Betriebszustand der Hochdruck-Gasentladungslampe dieser bis zum Erreichen eines stabilen Brennzustands nach dem Zünden ein Gleichstrom zugeführt wird und nach dem Erreichen eines sicheren, stabilen Brennzustands der Wechselstrom-Hochdruck-Gasentladungslampe ein für den zuverlässigen, stabilen Weiterbetrieb erforderlicher Wechselstrom zugeführt wird.

Dadurch, daß die Verzögerungseinrichtung ein Zeitglied enthält, ergibt sich eine besonders einfache und kostengünstige Ausführungsform.

Es ist vorteilhaft, daß die durch das Zeitglied bestimmte Verzögerungszeit der Verzögerungseinrichtung 10 bis 200 ms beträgt, weil somit sichergestellt wird, daß die Hochdruck-Gasentladungslampe sicher und schnell einen stabilen Brennzustand annimmt und diesen auch beibehält.

Es ist besonders vorteilhaft, das Vorschaltgerät in Kraftfahrzeugen für den Betrieb von Kraftfahrscheinwerfern zu verwenden, weil durch das sichere Überführen der Hochdruck-Gasentladungslampe in den stabilen Brennzustand bei dem Betrieb in Kraftfahrzeugen eine besonders hohe Sicherheit und Zuverlässigkeit erreicht wird.

Ein Ausführungsbeispiel ist in den Zeichnungen dargestellt und wird im folgenden anhand der Figuren näher beschrieben.

Gleiche und gleichwirkende Merkmale sind in allen Figuren mit gleichen Bezugszeichen versehen.

Es zeigen
Figur 1 ein Blockschaltbild eines erfindungsgemäßen Vorschaltgeräts,
Figur 2 einen schematischen Aufbau des Brückenschalters entsprechend Figur 1.

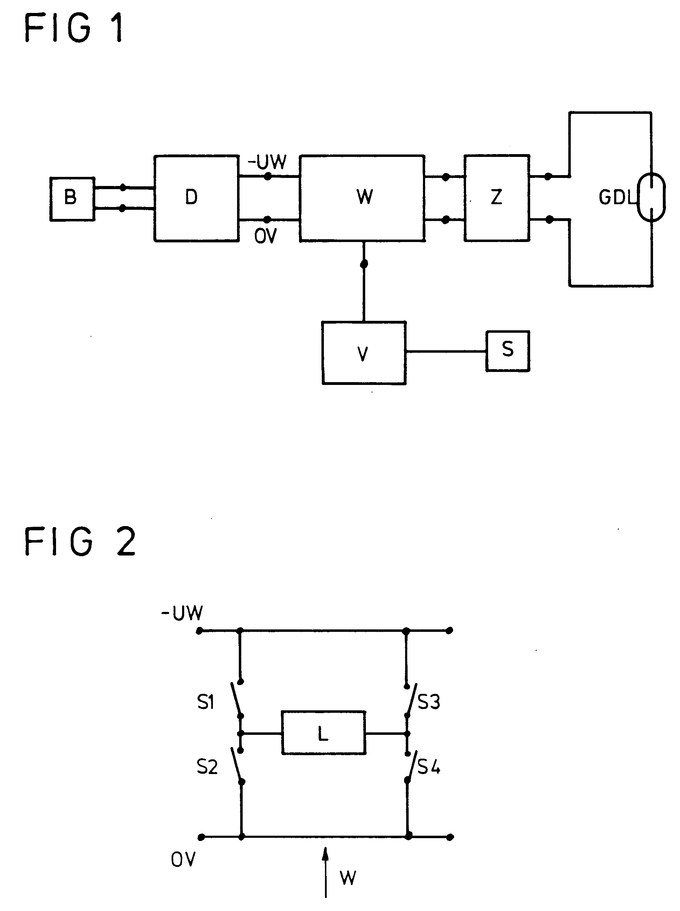

Figur 1 zeigt ein Blockschaltbild eines erfindungsgemäßen Vorschaltgeräts zum Starten und Betreiben von Wechselstrom-Hochdruck-Gasentladungslampem (GDL) in Kraftfahrzeugen.

Bei der Verwendung in Kraftfahrzeugen wird das Vorschaltgerät aus einer Gleichspannungsquelle (B) mit Gleichspannung gespeist, die die Fahrzeugbatterie ist. Die Gleichspannungsquelle ist mit einem DC/DC-Wandler (D) verbunden, der aus der Gleichspannung der Gleichspannungsquelle (B) eine stabilisierte und leistungsgeregelte Gleichspannung (OV, -UW) erzeugt, die an dem Ausgang des DC-DC-Wandlers (D) anliegt. Das 0-Volt-Potential (OV) und die Wandlerspannung (-UW) wird einem Brückenschalter (W) zugeführt, der mit dem DC-DC-Wandler (D) elektrisch leitend verbunden ist.

Der Brückenschalter (W) ist über eine Zündeinrichtung (Z), die aus der Spannung von dem Brückenschalter (W) eine für das Zünden der Hochdruck-Gasentladungslampe (GDL) geeignete Zündspannung erzeugt, mit einer Wechselstrom-Hochdruck-Gasentladungslampe (GDL) elektrisch leitend verbunden.

Der Brückenschalter (W) ist bei dem hier gezeigten Ausführungsbeispiel sowohl für den Gleichstrombetrieb als auch für den Wechselstrombetrieb geeignet.

Der Brückenschalter (W) ist über eine Verzögerungseinrichtung (V) mit einer Statusbestimmungseinrichtung (S) verbunden. Die Statusbestimmungseinrichtung (S) kann dabei als eine Lampenstrom und/oder Lampenspannungsmeßeinrichtung ausgebildet sein, die ein Signal erzeugt, sobald die Wechselstrom-Hochdruck-Gasentladungslampe (GDL) erfolgreich gezündet wurde. Als Maß für eine erfolgreiche Zündung kann z. B. eine vorgegebene Lampenspannung und/oder ein vorgegebener Lampenstrom dienen. Das von der Statusbestimmungseinrichtung (S) erzeugte Signal wird von der Verzögerungseinrichtung (V) um eine Verzögerungszeit verzögert an den Brückenschalter (W) weitergeleitet und dient als Umschaltsignal für den Brückenschalter (W) von dem Gleichstrombetrieb in den Wechselstrombetrieb. Die Verzögerungseinrichtung (V) kann dabei ein Zeitglied aufweisen, das z. B. in einfacher und kostengünstiger Weise als ein RC-Glied ausgebildet ist.

Figur 2 zeigt schematisch den Aufbau des Brückenschalters (W), wobei die Ansteuerelektronik nicht gezeigt ist.

Der Brückenschalter (W) ist sowohl mit dem 0-Volt-Potential (OV) als auch mit der Wandlerspannung (-UW) von dem hier nicht gezeigten DC-DC-Wandler (D) verbunden. Der Brückenschalter (W) weist in bekannter Weise einen ersten, zweiten, dritten und vierten Schalter (S1, S2, S3, S4) auf, die eine Last (L) mit der Gleichspannung (OV, -UW) verbinden können. Die Last (L) ist in diesem Fall die hier nicht gezeigte Zündeinrichtung (Z) und die Hochdruck-Gasentladungslampe (GDL). Der gezeigte Brückenschalter (W) kann drei Betriebszustände annehmen:
1. Sind alle Schalter (S1, S2, S3, S4) geöffnet, ist die Last (L) hochohmig abgeschlossen, wodurch z. B. eine Sicherheitsabschaltung für die Last (L) gewährleistet sein kann.
2. Gleichstrombetrieb: Bei diesem Betriebszustand werden bei der gewählten Anordnung des Brückenschalters (W) die diagonal angeordneteten Schalter (S1, S4 und S2, S3) derart geschaltet, dies erfolgt durch eine nicht gezeigte Ansteuerelektronik, daß entweder der erste und vierte Schalter (S1, S4) geschlossen und der zweite und dritte Schalter (S2, S3) geöffnet sind oder der zweite und dritte Schalter (S2, S3) geschlossen und der erste und vierte Schalter (S1, S4) geöffnet sind. Bei diesem Betriebszustand ist die Last (L) fest an die Gleichspannung (OV, -UW) angeschlossen.
3. Wechselstrombetrieb: Bei diesem Betriebszustand werden die Brückendiagonalen mit dem ersten und vierten Schalter (S1, S4) und dem zweiten und dritten Schalter (S2, S3) angesteuert, von der hier nicht gezeigten Ansteuerelektronik abwechselnd geöffnet und geschlossen, wodurch die Last (L) mit einer Wechselstrom versorgt wird.

Im folgenden wird die Wirkungsweise des Erfindungsgegenstands anhand der Zeichnungen kurz beschrieben.

Bei Inbetriebnahme des Vorschaltgeräts zum Starten und Betreiben von Wechselstrom-Hochdruck-Gasentladungslampen (GDL) befindet sich der Brückenschalter (W) im Gleichstrombetrieb oder wird in den Gleichstrombetrieb geschaltet. Der DC-DC-Wandler (D) erzeugt aus der Gleichspannung von der Gleichspannungsquelle (B) eine stabilisierte und leistungsgeregelte Gleichspannung (OV, -UW), die der Brückenschalter (W) über die Zündeinrichtung (Z) der Hochdruck-Gasentladungslampe (GDL) zuführt. Die Zündeinrichtung (Z) erzeugt aus der Spannung von dem Brückenschalter (W) eine Zündspannung, die ein sicheres Zünden der Hochdruck-Gasentladungslampe (GDL) gewährleistet. Die Statusbestimmungseinrichtung (S), die eine Lampenstrom- und/oder Lampenspannungsmeßeinrichtung sein kann, erzeugt ein Signal, sobald die Hochdruck-Gasentladungslampe (GDL) erfolgreich gezündet wurde. Dieses Signal wird verzögert durch die Verzögerungseinrichtung (V) dem Brückenschalter (W) zugeführt. Die nicht gezeigte Ansteuerelektronik des Brückenschalters (W) schaltet den Brückenschalter (W) sobald das Signal anliegt vom Gleichstrombetrieb in den Wechselstrombetrieb, so daß die Wechselspannungs-Hochdruck-Gasentladungslampe (GDL) nach erfolgreicher Zündung und zuverlässigem, schnellen Erreichen eines stabilen Brennzustands mit einer zur Aufrechterhaltung des stabilen Brennzustands erforderliche Wechselstrom versorgt wird.

Um sicherzustellen, daß zum einen ein schnelles sicheres Erreichen des stabilen Brennzustands der Hochdruck-Gasentladungslampe (GDL) erreicht wird und zum anderen sicherzustellen, daß der stabile Brennzustand auch beibehalten wird, wird die Verzögerungszeit zum Umschalten des Brückenschalters (W) von dem Gleichstrombetrieb in den Wechselstrombetrieb derart ausgelegt, daß ein Erlöschen der Hochdruck-Gasentladungslampe (GDL) vermieden wird. Die Verzögerungszeit zur Weiterleitung des Signals von der Statusbestimmungseinrichtung (S) an den Brückenschalter (W) kann dabei beispielhaft bei etwa 10 bis 200 ms liegen. Ein besonders gutes Startverhalten der Wechselstrom-Hochdruck-Gasentladungslampe (GDL), wie sie für den Betrieb in Kraftfahrzeugen geeignet ist, wird erreicht, wenn die Verzögerungszeit bei beispielhaft etwa 60 ms liegt.

### Bezugszeichenliste

### Vorschaltgerät zum Starten und Betreiben von Wechselstrom-Hochdruck-Gasentladungslampen

- B: Gleichspannungsquelle
- D: DC/DC-Wandler
- GDL: Hochdruck-Gasentladungslampe
- L: Last
- OV: Null-Volt-Potential
- S: Statusbestimmungseinrichtung
- S1: erster Schalter
- S2: zweiter Schalter
- S3: dritter Schalter
- S4: vierter Schalter
- -UW: Wandlerspannung
- V: Verzögerungseinrichtung
- W: Brückenschalter

## Patentansprüche

1. Vorschaltgerät zum Starten und Betreiben von Wechselstrom-Hochdruck-Gasentladungslampen, das aus einer Gleichspannungsquelle (B) gespeist wird, mit einem DC-DC-Wandler (D), der aus der Gleichspannung der Gleichspannungsquelle (B) eine stabilisierte und/oder leistungsgeregelte Gleichspannung (OV, -UW) erzeugt, mit einem Brückenschalter (W), der mit dem DC/DC-Wandler (D) verbunden ist und der über eine Zündeinrichtung (Z) zum Erzeugen einer Zündspannung mit der Hochdruck-Gasentladungslampe (GDL) verbunden ist, wobei der Brückenschalter im Gleichstrombetrieb oder im Wechselstrombetrieb betrieben werden kann, dadurch gekennzeichnet, daß der Brückenschalter (W) bei Inbetriebnahme des Vorschaltgeräts im Gleichstrombetrieb betrieben wird, daß eine Statusbestimmungseinrichtung (S), die ein Signal erzeugt, wenn die Hochdruck-Gasentladungslampe (GDL) erfolgreich gezündet wurde, mit einer Verzögerungseinrichtung (V) verbunden ist, die mit dem Brückenschalter (W) verbunden ist und diesem das Signal, von der Statusbestimmungseinrichtung (S) um eine Verzögerungszeit verzögert, zuleitet und daß der Brückenschalter (W) durch das Signal von dem Gleichstrombetrieb in den Wechselstrombetrieb geschaltet wird.

2. Vorschaltgerät nach Anspruch 1, dadurch gekennzeichnet, daß die Statusbestimmungseinrichtung (S) eine Lampenstrom- und/oder Lampenspannungsmeßeinrichtung ist, die das Signal erzeugt, wenn der Lampenstrom und/oder die Lampenspannung einen vorgegebenen Wert erreicht.

3. Vorschaltgerät nach Anspruch 2, dadurch gekennzeichnet, daß die Verzögerungseinrichtung (V) ein Zeitglied enthält.

4. Vorschaltgerät nach Anspruch 3, dadurch gekennzeichnet, daß die durch das Zeitglied bestimmte Verzögerungszeit der Verzögerungseinrichtung (V) 10 bis 200 ms beträgt.

5. Vorschaltgerät nach mindestens einem der vorstehenden Ansprüche, gekennzeichnet durch die Verwendung in Kraftfahrzeugen für den Betrieb von Kraftfahrzeugscheinwerfern.

## Claims

1. An auxiliary switching device for starting and operating AC high-pressure gas discharge lamps which is supplied from a DC voltage source (B), having a DC-to-DC converter (D) which generates a stabilised or controlled-output DC voltage (OV,-UW) from the DC voltage of the DC voltage source (B), having a switching bridge (W) which is connected to the DC-to-DC converter (D) and which is connected to the high-pressure gas discharge lamp (GDL) via a starting device (Z) for generating a starting voltage, wherein the switching bridge can be operated in DC or in AC operation, characterised in that when the auxiliary switching device is initially operated the switching bridge (W) is operated in DC operation, that a status determination device (S) which generates a signal when the high-pressure gas discharge lamp (GDL) has been successfully started is connected to a delay device (V), which is connected to the switching bridge (W) and which feeds the signal to the latter from the status determination device (S) delayed by a delay period, and that the switching bridge (W) is switched from DC operation to AC operation by the signal.

2. An auxiliary switching device according to claim 1, characterised in that the status determination device (S) is a lamp current- and/or lamp voltage measuring device which generates the signal when the lamp current and/or the lamp voltage reaches a predetermined value.

3. An auxiliary switching device according to claim 2, characterised in that the delay device (V) contains a time function element.

4. An auxiliary switching device according to claim 3, characterised in that the delay period of the delay device (V) which is determined by the time function element amounts to 10 to 200 ms.

5. An auxiliary switching device according to at least one of the preceding claims, characterised by its use in motor vehicles for operating motor vehicle headlamps.

## Revendications

1. Ballast pour l'allumage et le fonctionnement de lampes luminescentes à gaz sous haute pression à courant alternatif, qui est alimenté depuis une source de tension continue (B), comportant un convertisseur à courant continu/continu (D) qui produit à partir de la tension continue de la source de tension continue (B) une tension continue stabilisée et/ou régulée en puissance (OV, -UW), comportant un commutateur en pont (W) qui est relié au convertisseur à courant continu (D), et qui est relié à la lampe luminescente à gaz sous haute pression (GDL) via un dispositif d'allumage (Z) destiné à produire une tension d'allumage, le commutateur en pont pouvant être mis en fonctionnement à courant continu ou en fonctionnement à courant alternatif, caractérisé en ce que le commutateur en pont (W) est mis, lors de la mise en service du ballast, en fonctionnement à courant continu, en ce qu'un dispositif de détermination d'état (S), qui produit un signal lorsque la lampe luminescente à gaz sous haute pression (GDL) a été allumée avec succès, est relié à un dispositif retardateur (V) qui est relié au commutateur en pont (W) et qui transmet à celui-ci le signal du dispositif de détermination d'état (S) de façon retardée avec un délai de retard, et en ce que le commutateur en pont (W) est commuté par le signal depuis le fonctionnement à courant continu au fonctionnement à courant alternatif.

2. Ballast selon la revendication 1, caractérisé en ce que le dispositif de détermination d'état (S) est un dispositif de mesure du courant de lampe et/ou de la tension de lampe qui produit le signal lorsque le courant de lampe et/ou la tension de lampe atteint une valeur prédéterminée.

3. Ballast selon la revendication 2, caractérisé en ce que le dispositif retardateur (V) comporte un circuit temporisé.

4. Ballast selon la revendication 3, caractérisé en ce que le délai de retard déterminé par le circuit temporisé du dispositif retardateur (V) est de 10 à 200 ms.

5. Ballast selon l'une au moins des revendications précédentes, caractérisé par l'utilisation dans des véhicules automobiles pour le fonctionnement de projecteurs de véhicules automobiles.
